# EUROPÄISCHE PATENTANMELDUNG

(11) **EP 2 062 549 A1**
(43) Veröffentlichungstag der Anmeldung: **27.05.2009**
(21) Anmeldenummer: 07076010.3
(22) Anmeldetag: 21.11.2007
(51) Int. Cl.: A61C 8/00

(54) **Disk-Implantat**

(71) Anmelder: Biomed Est., 9490 Vaduz (LI)
(72) Erfinder: Ihde, Stefan, Dr., 8738 Uetliburg (CH)
(74) Vertreter: Radwer, Dieter

(57) **Zusammenfassung**

Die Erfindung betrifft ein Disk-Implantat mit einem weiter verbesserten Implantatfuß, das als Implantatbasis für die Aufnahme und Befestigung eines Zahnersatzes oder einer Krone dient.

Um auch bei relativ kleinen Abmessungen eine möglichst große Auflage des Implantatfußes auf der Kortikalis des Kieferknochens und nach der Insertion eine hohe Primärstabilität des inserierten Implantates zu erreichen, schlägt die Erfindung einen Implantatfuß vor, der über einen Kreiswinkel α eine kreisrunde Kontur besitzt, an die sich zwei Längsseiten 7; 8 anschließen, die, einen Winkel β einschließend, symmetrisch zur Mittelachse 11 des Implantatfußes 5 angeordnet sind, wobei die Enden der Längsseiten 7; 8 außerhalb des Vollkreises 12 der kreisrunden Kontur des Fußabschnittes 6 liegen und durch einen Radius 9 miteinander verbunden sind. Vorteilhafter Weise besitzt das Implantat 12 einen Schaft 2 mit einem ovalen bis elliptischen Profilquerschnitt - Fig. 2.

## Beschreibung

Die Erfindung betrifft ein Disk-Implantat, das durch basale Osseointegration im Kieferknochen verankert wird und zur Aufnahme und Befestigung eines Zahnersatzes oder einer Krone dient.

Für die Ausbildung und Anordnung des Implantatfußes von Disk-Implantaten, über den das Implantat im Kieferknochen durch basale Osseointegration verankert ist und die vom Implantat aufgenommenen Kaukräfte in den Kieferknochen eingetragen werden, sind bereits die unterschiedlichsten Lösungen vorgeschlagen worden.

Neben Implantaten mit einem annähernd quadratischen bis rechteckigen Implantatfuß - DE 299 17 858.7, DE 3 018 255 - oder Implantaten, deren Fußteil durch eine oder mehrere übereinander liegende runde Scheiben mit gleichem oder unterschiedlichem Scheibendurchmesser gebildet wird - DE 199 48 910 A1, EP 0 935 949 B1, sind Implantate mit einem Implantatfuß, der aus zwei nebeneinander liegenden Ringen - EP 1 050 282 B1 - besteht und Implantate, deren Fußteil sich aus unterschiedlichen, aneinandergefügten geometrischen Formen mit unterschiedlichen Flächeninhalten zusammensetzt - DE 202 02 424.5, EP 1 050 282 B1 und EP 1 336 388 B1 - bekannt.

Die Notwendigkeit nach Disk-Implantaten mit unterschiedlicher Konfiguration des Implantatfußes ergibt sich zwangsweise aus den jeweiligen individuellen Voraussetzungen und Bedingungen für die Insertion des Implantates und für die Gewährleistung eines dauerhaft festen Sitzes des inserierten Implantates. Zu diesen Voraussetzungen und Bedingungen gehören beispielsweise die individuelle Anatomie des Kieferknochens, die vorhandene Knochensubstanz und das Implantationsgebiet im Kiefer eines Patienten. Diese und weitere Voraussetzungen und Bedingungen können durch Disk-Implantate mit einem durchgängig einheitlichen ausgebildeten Implantatfuß nicht erfüllt werden.

Der Erfindung liegt die Aufgabe zugrunde, einen Implantatfuß für ein Disk-Implantat anzugeben, mit dem auch bei kleineren äußeren Fußabmessungen nach der Insertion des Implantates eine größtmögliche Auflage des Implantatfußes auf der Kortikalis des Kieferknochen erreicht werden kann.

Erfindungsgemäß wird die Aufgabe durch ein Disk-Implantat nach den Merkmalen von Anspruch 1 gelöst. Vorteilhafte Weiterbildungen des Erfindungsgegenstandes ergeben sich aus den Unteransprüchen 2 bis 9.

Der Implantatfuß des erfindungsgemäßen Implantates besitz über einen Kreiswinkel α von 260° bis 280° eine kreisrunde Kontur, an die sich zwei Längsseiten anschließen, die symmetrisch zur Mittelachse des Implantatfußes angeordnet sind und einen Winkel β von 35° bis 55° einschließen. Die Längsachsen enden außerhalb des Vollkreises der kreisrunden Kontur und sind über einen abschließenden Radius miteinander verbunden, wobei im Endbereich der Längsseiten eine Durchgangsbohrung vorgesehen ist, die beispielsweise zur Aufnahme einer Sicherungsschraube dient, die das inserierte Implantat gegen Rotation fixiert.

Der Schaft des Implantates, der kopfseitig beispielsweise mit einem Abutment oder mit einem Kopfgewinde versehen oder als Zementtierpfosten ausgebildet ist, besitzt vorzugsweise ein ovales bzw. elliptisches Profil, wobei die Längsachse dieses Profils in der Insertionsrichtung des Implantates liegt.

Für die Insertion des erfindungsgemäßen Implantates wird auf chirurgische Weise ein T-förmig ausgebildetes Implantatbett im Kieferknochen hergestellt und anschließend das Implantat von der Außenseite des Kieferknochens her, basal in das Implantatbett eingesetzt. Nach Erreichen der vorgesehenen finalen Einschubposition wird das Implantat im Implantatbett wahlweise so um seine Längsachse nach links oder rechts gedreht, dass eine der Längsseiten, die sich an die runde Kontur des Implantatfußes anschließen, vollständig auf der Kortikales des Kieferknochens aufliegt.

Mit der Links- oder Rechtsdrehung des Implantates im Implantatbett verändert sich auch die Lage der Längsachse des Profils des Implantatschaftes gegenüber der Insertionsrichtung bzw. gegenüber der Längsachse des vertikalen Teiles des Implantatbettes. Da es trotz größter Sorgfalt kaum möglich ist, den vertikalen Teil des Implantatbettes passgenau zum jeweiligen Profilquerschnitt des Implantatschaftes herzustellen, kommen bei einem ovalen bis elliptischen Profil die Längsseiten dieses Profils durch die Links- oder Rechtsdrehung des Implantats in unmittelbaren Kontakt mit den Wandungen des vertikalen Teiles des Implantatbettes und werden mit diesen verspannt.

In der Mantelfläche des Abutmens ist ferner mindestens eine Rotationssicherung, beispielsweise in Form einer Abflachung oder einer Flachseite angeordnet, die mit einem entsprechenden Gegenstück in der Aufnahmebohrung eines Aufbauteiles zusammenwirkt und eine Eigenrotation der auf dem Abutment über das Aufbauteil angeordneten Krone oder eines anderweitigen Zahnersatzes sicher verhindert.

Neben der vergrößerten Auflage des Implantatfußes auf der Kortikalis, die sich vorteilhaft auf einen dauerhaften, festen Sitz des Implantates und die sichere Einleitung der Kaukräfte in den Kieferknochen auswirkt, wird mit der erfindungsgemäßen Lösung und dem Verspannen des Schaftes im vertikalen Teil des Implantatbettes eine hohe Primärstabilität erreicht, da sowohl der Implantatfuß als auch der vertikale Implantatteil, d. h. der Schaft, im Implantatbett des Kieferknochens verspannt ist. Mit den bisher bekannten Lösungen für die Ausbildung des Implantatfußes und des Schaftes eines Disk-Implantates war dies nicht möglich.

Die Erfindung soll nachstehend an einem Ausführungsbeispiel näher erläutert werden. In der dazugehörigen Zeichnung zeigen:
- Fig. 1: die Seitenansicht des erfindungsgemäßes Disk-Implantates,
- Fig. 2: die Draufsicht auf den Implantatfuß mit dem Schnitt A - A aus Fig. 1,
- Fig. 3: eine schematische Darstellung des in einen Kieferknochen inserierten Disk-Implantates,
- Fig. 4: den Schnitt B - B aus Fig. 3,
- Fig. 5: die gegen Rotation gesicherte Finalposition des Disk-Implantates nach Abschluss der Insertion.

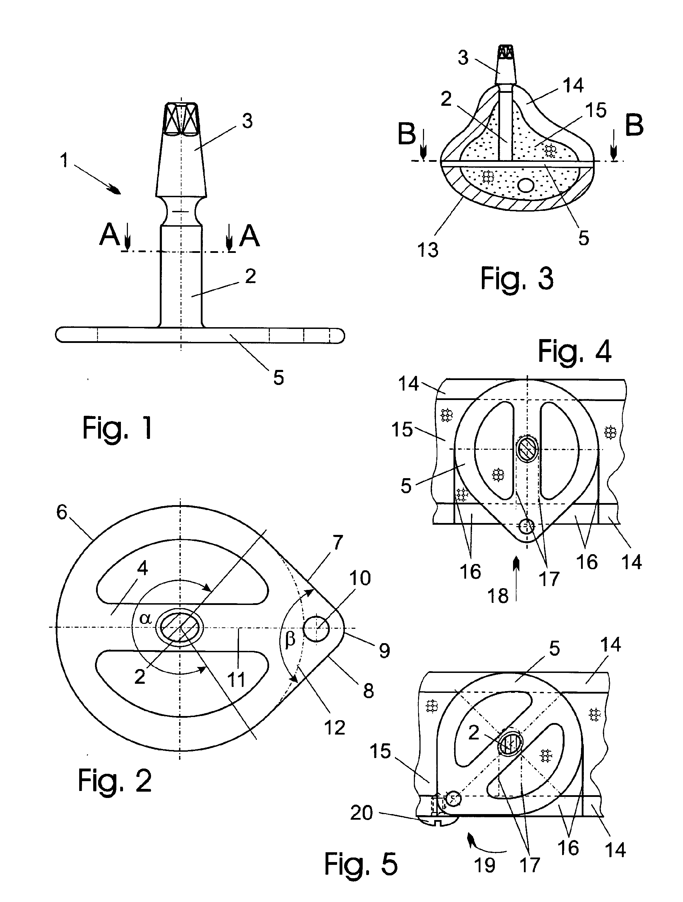

Das Disk-Implantat 1 besitzt, wie aus Fig. 1 hervorgeht, einen allgemein bekannten konstruktiven Aufbau und besteht aus dem Implantatfuß 5 und dem orthogonal zum Implantatfuß 5 angeordneten Implantatschaft 2, der über den Steg 4 mit dem Implantatfuß 5 fest verbunden ist und kopfseitig mit einem Abutment 3 zur Aufnahme und Befestigung einer Krone oder des Aufbauteiles eines Zahnersatzes abschließt.

Erfindungsgemäß verfügt der Fußabschnitt 6 des Implantatfußes 5 über eine kreisrunde Kontur, die in etwa dem Durchmesser des Fräswerkzeuges zur Herstellung des Implantatbettes 16 entspricht und sich über einen Kreiswinkel α von 260° bis 280° erstreckt - Fig. 2. An diese kreisrunde Kontur schließen sich zwei Längsseiten 7 und 8 an, die symmetrisch zur Mittelachse 11 des Implantaffußes 5 angeordnet sind und deren Enden, die über den Vollkreis 12 der kreisrunden Kontur hinausgehen, durch einen, die Konfiguration des Implantatfußes 5 abschließenden Radius 9 miteinander verbunden sind. Im Endbereich zwischen den Längsseiten 7; 8 , die einen Winkel β von ca. 35° bis 55° einschließen, ist eine Durchgangsbohrung 10 vorgesehen, die für den Fall, dass das inserierte Disk-Implantat nach Erreichen seiner finalen Einschubposition nicht im Implantatbett gedreht wird, zur Aufnahme einer Sicherungsschraube dient. Die Sicherungsschraube wird in den Kieferknochen eingeschraubt, um das inserierte Implantat zusätzlich zu fixieren und gegen eventuelle Rotation zu sichern - Fig. 4.

Die Insertion des erfindungsgemäßen Disk-Implantates 1, das durch basale Osseointegration im Kieferknochen 13 verankert und in Insertionsrichtung 18 von der Außenseite des Kieferknochens 13 her in ein zuvor auf chirurgische Weise durch Fräsen hergestelltes Implantatbett 16 eingesetzt wird, ist in den Fig. 3 bis 5 schematisch dargestellt.

In Fig. 4 befindet sich das inserierte Disk-Implantat 1 in seiner finalen Einschubposition und ist so im Implantatbett 16 eingespannt, dass, bedingt durch die erfindungsgemäße Ausbildung, große Flächenanteile des Implantatfußes 5 auf der Kortikales 14 des Kieferknochens 13 aufliegen. Gleichzeitig besteht die Möglichkeit, dass das Disk-Implantat 1 bei eventuell auftretenden Lastspitzen analog einem natürlichen Zahn in begrenztem Maße in die Spongiosa 15 des Kieferknochens 13 einfedern kann. Grundlage hierfür ist die durch die konstruktive Gestaltung des Implantatfußes 5 und durch die Verbindung von Implantatfuß 5 und Implantatschaft 2 geschaffene Elastizität im Bereich des Implantatfußes 5. Sofern das gemäß Fig. 4 inserierte Disk-Implantat 1 nicht im Implantatbett 16 gedreht wird, kann es durch Einsetzen einer Sicherungsschraube in die Durchgangsbohrung 10 zusätzlich zu seiner Einspannung im Implantatbett, wie vorstehend bereits beschrieben, fixiert werden.

Um die Flächenanteile des Implantatfußes 5, die auf der Kortikalis 14 des Kieferknochens 13 aufliegen, zu vergrößern, was insbesondere für einen dauerhaft festen Sitz von Disk-Implantaten mit relativ kleineren Fußabmessungen von Vorteil sein kann, wird das erfindungsgemäße Implantat nach Erreichen seiner finalen Einschubposition im Implantatbett 16 wahlweise um ca. 45° nach rechts oder links gedreht. Nach Abschluss der Links- oder Rechtsdrehung liegt, wie in Fig. 5 dargestellt, eine der Längsseiten 7; 8 des Implantatfußes 5 vollständig auf der Kortikalis 14 des Kieferknochens 13 auf und vergrößert somit die Auflagefläche. In dieser Endposition kann das inserierte Disk-Implantat 1, das bereits im horizontalen Teil des Implantatbettes 16 eingespannt ist, durch eine Sicherungsschraube 20 zusätzlich fixiert werden.

Nach einem weiteren Merkmal der Erfindung besitzt der Implantatschaft 2 vorzugsweise ein ovales bis elliptisches Profil - Fig. 2 bis 5. Diese Maßnahme hat einerseits den Vorteil, dass die Lichteweite des vertikalen Teiles 17 des Implantatbettes 16 für das Einbringen des Disk-Implantates 1 kleiner gefräst werden kann und der Implantatschaft 2 gegenüber einem herkömmlichen runden Implantatschaft dennoch einen größeren Profilquerschnitt hat und dadurch in der Lage ist, höhere Kräfte aufzunehmen und über den Implantatfuß 5 in den Kieferknochen 13 einzutragen.

Aus der implantologischen Praxis ist ferner bekannt, dass es kaum möglich ist, den vertikalen Teil 17 des Implantatbettes16 so exakt herzustellen, dass er nach Insertion des Implantates den Implantatschaft 2 im Bereich des vertikalen Teiles 17 des Implantatbettes 16 stabilisiert. Mit dem Drehen des inserierten Implantates um die Implantatlängsachse, beispielsweise in Drehrichtung 19, verändert sich auch die Lage der Achsen des ovalen Profils des Implantatschaftes 2 gegenüber der Einschubposition, in der die Längsachse des ovalen Schaftprofiles in der Insertionsrichtung 18 liegt. Da die Abmessung des Implantatschaftes 2 über die Längsachse des ovalen Profils größer ist als die Lichteweite des vertikalen Teiles 17 des Implantatbettes 16, kommen die Längsseiten des ovalen Schaftprofiles in direkten Kontakt mit den Seitenwänden des vertikalen Teiles 17 des Implantatbettes 16 und werden zum Abschluss der Drehbewegung mit diesen verspannt. Mit relativ einfachen Mitteln wird auf diese Weise eine hohe Primärstabilität des inserierten Disk-Implantates erreicht, da sowohl der Implantatfuß 5 als auch der Implantatschaft 2 im Implantatbett 16 und im vertikalen Teil 17 des Implantatbettes 16 fest eingespannt sind.

### BEZUGSZEICHENAUFSTELLUNG

- 1: Disk-Implantat
- 2: Implantatschaft
- 3: Abutment
- 4: Steg
- 5: Implantatfuß
- 6: Fußabschnitt
- 7: Längsseite
- 8: Längsseite
- 9: Radius
- 10: Durchgangsbohrung
- 11: Mittelachse
- 12: Vollkreis
- 13: Kieferknochen
- 14: Kortikalis
- 15: Spongiosa
- 16: Implantatbett
- 17: vertikaler Teil des Implantatbettes
- 18: Insertionsrichtung
- 19: Drehrichtung nach Insertion
- 20: Sicherungsschraube

## Patentansprüche

1. Disk-Implantat mit einem scheibenförmigen Implantatfuß (5) und einem orthogonal zum Implantatfuß angeordneten Implantatschaft (2), der über Stege (4) mit dem Implantatfuß (5) fest verbunden ist und kopfseitig ein Abutment (3) oder ein Kopfgewinde aufweist, **dadurch gekennzeichnet, dass** der Fußabschnitt (6) des Implantatfußes (5) über einen Kreiswinkel α eine kreisrunde Kontur besitzt, an die sich zwei Längsseiten (7; 8) anschließen, die, einen Winkel β einschließend, symmetrisch zur Mittelachse (11) des Implantatfußes (5) angeordnet sind, wobei die Enden der Längsseiten (7; 8) außerhalb des Vollkreises (12) der kreisrunden Kontur des Fußabschnittes (6) liegen und durch einen Radius (9) miteinander verbunden sind.

2. Disk-Implantat nach Anspruch 1, **dadurch gekennzeichnet, dass** der Kreiswinkel α zwischen 260° und 280°ausgewählt ist.

3. Disk-Implantat nach Anspruch 1, **dadurch gekennzeichnet, dass** im Endbereich der Längsseiten (7; 8) eine Durchgangsbohrung (10) vorgesehen ist.

4. Disk-Implantat nach Anspruch 1, **dadurch gekennzeichnet, dass** der Winkel β ca. 35° bis 55° beträgt.

5. Disk-Implantat nach Anspruch 1, **dadurch gekennzeichnet, dass** der Schaft (2) ein ovales oder elliptisches Profil besitzt, das nach Abschluss der Insertion des Implantates (1) mit den Wandflächen des vertikalen Schlitzes (17) des Implantatbettes (16) verspannt ist.

6. Disk-Implantat nach Anspruch 1, **dadurch gekennzeichnet, dass** die Finalposition des Implantates (1) nach Abschluss der Insertion durch eine Schraube (20) gegen Rotation gesichert ist.

7. Disk-Implantat nach einem der Ansprüche 1 bis 6, **dadurch gekennzeichnet, dass** der Schaft (2) kopfseitig ein Abutment (3) aufweist, das fest mit dem Schaft (2) verbunden ist.

8. Disk-Implantat nach einem der Ansprüche 1 bis 6, **dadurch gekennzeichnet, dass** der Schaft ( 2) mit einem Kopfgewinde versehen ist.

9. Disk-Implantat nach einem der Ansprüche 1 bis 6, **dadurch gekennzeichnet, dass** der Schaft ( 2) ein einfacher Zementierpfosten ist.

10. Disk-Implantat nach einem der Ansprüche 1 bis 7, **dadurch gekennzeichnet, dass** in der Mantelfläche des Abutments (3) eine Rotationssicherung vorgesehen ist.
